# EUROPÄISCHE PATENTANMELDUNG

(11) **EP 2 937 655 A1**
(43) Veröffentlichungstag der Anmeldung: **28.10.2015**
(21) Anmeldenummer: 14165875.7
(22) Anmeldetag: 24.04.2014
(51) Int. Cl.: F27D 17/00, F22B 1/18, F22B 3/04

(54) **Verfahren und Anlage zur Nutzung der Abwärme aus Abgasen zur Dampfgewinnung**

(71) Anmelder: Primetals Technologies Austria GmbH, 4031 Linz (AT)
(72) Erfinder: Enickl, Gerhard, 4407 Dietach (AT); Patrejko, Andreas, 4222 St. Georgen an der Gusen (AT)
(74) Vertreter: Metals@Linz

(57) **Zusammenfassung**

Die Erfindung betrifft ein Verfahren zur Nutzung der Abwärme aus Abgasen zur Dampfgewinnung, wobei mit Wasser durchströmte Kühlflächen (3) von den Abgasen beheizt werden.

Damit das Verfahren ohne einen Dampfkreislauf auskommt, ist vorgesehen, dass das in den Kühlflächen (3) erhitzte Wasser unter Druckbeaufschlagung als Heißwasser in zumindest einem Heißwasserspeicher (5) gespeichert wird, und erst durch Entspannung des Heißwassers bei Entnahme aus dem Heißwasserspeicher Dampf hergestellt wird, welcher zumindest einem Dampfabnehmer zugeführt wird.

## Beschreibung

### GEBIET DER ERFINDUNG

Die Erfindung betrifft ein Verfahren zur Nutzung der Abwärme aus Abgasen, zum Beispiel den Rauchgasen der Metall- oder Stahlerzeugung, insbesondere den Rauchgasen eines Lichtbogenofens oder eines Sauerstoffblaskonverters, zur Dampfgewinnung, wobei mit Wasser durchströmte Kühlflächen von den Abgasen beheizt werden, sowie eine entsprechende Anlage.

Der Lichtbogenofen, genauer Elektrolichtbogenofen, ist ein Ofen zum Einschmelzen von Stahlschrott zur erneuten Verwendung als Stahl-Neuprodukt.

Der Sauerstoffblaskonverter ist ein Tiegel, in dem durch Zuführung von Sauerstoff in verflüssigtes Roheisen überschüssiger Kohlenstoff herausoxidiert wird, wodurch das Roheisen zu Stahl wird.

Die Erfindung ist aber nicht nur auf Abgase oder Rauchgase in der Stahl- oder allgemeiner in der Metallerzeugung anwendbar, sondern generell auf heiße Abgase.

### STAND DER TECHNIK

Aus der US 2012/0320941 A1 ist es bekannt, die Rauchgase aus einem Elektrolichtbogenofen zur Beheizung eines Abhitzekessels zu verwenden, der Dampf für eine Dampfturbine erzeugt. Die Rauchgasleitung aus dem Elektrolichtbogenofen mündet in eine wassergekühlte Leitung, welche wassergekühlte Rohre umfasst, welche die Kühlflächen des Abhitzekessels bilden. Das Kühlwasser wird in den Rohren erhitzt und als gesättigter Dampf in einer Dampftrommel zur Weiterverwendung in der Dampfturbine gespeichert.

In der Regel wird in der Sekundärmetallurgie die Stahlschmelze aus dem Lichtbogenofen oder dem Sauerstoffblaskonverter für das Gießen fertig behandelt, etwa in einer Vakuumanlage. Da hier oft die Vakuumentgasung eingesetzt wird, wird punktuell Wasserdampf benötigt. Dieser kann aus einem bestehenden Dampfkreislauf im Stahlwerk, etwa auch aus dem Dampfkreislauf, wie er in der US 2012/0320941 A1 geoffenbart ist, entnommen werden. Eine andere Lösung wäre, die Vakuumentgasung mittels mechanischer Vakuumpumpen durchzuführen.

Falls für die Vakuumentgasung Wasserdampf verwendet werden soll, jedoch kein Dampfkreislauf besteht oder angezapft werden kann, wäre es unwirtschaftlich, einen eigenen Dampfkreislauf mit Abhitzekessel und Dampftrommel zu bauen, dessen Dampf nur für die Vakuumentgasung verwendet wird. Denn für die Vakuumentgasung wird nur periodisch eine beschränkte Menge Dampf benötigt.

### DARSTELLUNG DER ERFINDUNG

Es ist daher eine Aufgabe der Erfindung, ein Verfahren zur Nutzung der Abwärme aus Abgasen, insbesondere den Rauchgasen der Metall- oder Stahlerzeugung, zur Dampfgewinnung zur Verfügung zu stellen, das ohne einen Dampfkreislauf auskommt.

Die Aufgabe wird durch ein Verfahren nach Anspruch 1 gelöst, bei dem mit Wasser durchströmte Kühlflächen von den Abgasen beheizt werden, wobei das in den Kühlflächen erhitzte Wasser unter Druckbeaufschlagung als Heißwasser in zumindest einem Heißwasserspeicher gespeichert wird, und erst durch Entspannung des Heißwassers bei Entnahme aus dem Heißwasserspeicher Dampf hergestellt wird, welcher zumindest einem Dampfabnehmer, etwa der Stahlerzeugung, zugeführt wird.

Statt eines Dampfkreislaufs wird also ein Heißwasserkreislauf vorgesehen, der benötigte Dampf wird erst bei Entnahme von Heißwasser durch Entspannung des unter Druck stehenden Heißwassers erzeugt. Damit entfällt die bei Dampfkreisläufen übliche Dampftrommel. Das erfindungsgemäße Verfahren arbeitet mit einem wassergekühlten System, das im Aufbau einfacher ist als ein System, das Dampf enthält. Wassergekühlte Abgasstrecken haben darüber hinaus den Vorteil, dass sie nicht steigend verlegt werden müssen.

Der durch das erfindungsgemäße Verfahren aus der Abwärme von Rauchgasen der Metall- oder Stahlerzeugung, z.B. aus Rauchgasen eines Lichtbogenofens oder eines Sauerstoffblaskonverters, erzeugte Dampf wird zumindest teilweise, in der Regel hauptsächlich, zur Vakuumentgasung von Stahlschmelze (oder einer anderen Metallschmelze) verwendet werden. Alternativ, abwechselnd oder zusätzlich könnte der Dampf zumindest teilweise in ein bestehendes Dampfnetz, etwa zur Strom- oder Fernwärmeerzeugung, eingebracht werden.

Bei der Vakuumentgasung kommt eine Wasserdampfstrahl-Vakuumpumpe zum Einsatz. Der Treibdampf ist Wasserdampf mit einem Ruhedruck bis zu etwa 2 MPa (20 bar). Die Treibdüse ist meist als Laval-Düse ausgeführt, so dass hinter dem engsten Querschnitt Überschallgeschwindigkeit auftritt. Die Pumpwirkung wird durch den Strahl des Treibdampfs erzeugt, der durch Impulsaustausch Gas ansaugt, beschleunigt und dadurch fördert, wodurch ein Unterdruck und schließlich ein Vakuum erzeugt wird.

Damit das in den Kühlflächen erhitzte Wasser nicht verdampft, muss es unter hohem Druck gehalten werden. Da die maximale Abgastemperatur nach Anlagen zur Stahlerzeugung, insbesondere nach einem Lichtbogenofen oder einem Sauerstoffblaskonverter, bis 1600 °C betragen kann, muss es in diesem Fall auf einem Druck größer 1 MPa, insbesondere im Bereich von 2,5 bis 5 MPa, gehalten werden.

Bei der Herstellung des Dampfs erfolgt die Entspannung des entnommenen Heißwassers entlang der Siedelinie aus dem Heißwasserspeicher. Die Siedelinie bilden jene Temperatur-Druck-Wertepaare in einem Phasendiagramm, die an der Phasengrenzlinie Gas-Flüssigkeit liegen. Sie wird auch als Siedepunktskurve, Siedekurve, Siededruckkurve oder Siedepunktkurve bezeichnet.

Wenn die durch das Ab- oder Rauchgas an die Kühlflächen abgegebene Wärmemenge größer ist als die Wärmemenge, die für die Heißwasserbereitung im Heißwasserspeicher benötigt wird, kann zumindest ein Teil des in den Kühlflächen erhitzten Wassers in einem Wärmetauscher abgekühlt und anschließend wieder den Kühlflächen als Kühlwasser zugeleitet werden. Die abgezogene Wärme kann beispielsweise einem Kühlturm oder einem Fernwärmenetz zugeführt oder zum Vorwärmen von Prozesswasser verwendet werden.

Zur Vermeidung von Dampfbildung im Heißwasserspeicher kann vorgesehen werden, dass die Temperatur des Heißwassers im Heißwasserspeicher auf einen Wert geregelt wird, der unterhalb oder auf der Siedetemperatur liegt. Es wäre auch denkbar, stattdessen den Druck im Heißwasserkreislauf zu erhöhen.

Die für die Dampfherstellung entnommene Wassermenge kann durch Speisewasser, das den Kühlflächen zugeführt wird, ersetzt werden.

Falls statt einem Heißwasserspeicher, der allen Kühlflächen gemeinsam ist, mehrere parallel geschaltete Heißwasserspeicher vorgesehen sind, kann das in den Kühlflächen erhitzte Wasser mehreren parallel geschalteten Heißwasserspeichern zugeführt werden. Dies hat den Vorteil, dass der Dampf flexibel verwertet werden kann. Dabei wird ein Heißwasserspeicher jeweils von einer oder mehreren Kühlflächen erhitzt, die nur mit diesem Heißwasserspeicher verbunden sind.

Eine mögliche Anlage zur Durchführung des erfindungsgemäßen Verfahrens umfasst zumindest
- einen Abgaskanal zum Ableiten von Abgasen, mit Kühlflächen, die mit Wasser durchströmt und von den Abgasen beheizt werden können, und ist dadurch gekennzeichnet, dass
- zumindest ein Heißwasserspeicher vorgesehen ist, der mit den Kühlflächen verbunden und geeignet ist, das in den Kühlflächen erhitzte Wasser unter Druckbeaufschlagung als Heißwasser zu speichern, sowie
- eine Entnahmeeinrichtung zur Entnahme von Heißwasser, die so ausgebildet ist, dass durch Entspannung des Heißwassers bei Entnahme aus dem Heißwasserspeicher Dampf hergestellt wird, sowie
- eine Verbindungsleitung zwischen Entnahmeeinrichtung und zumindest einem Dampfabnehmer.

Die erfindungsgemäße Anlage kann insbesondere umfassen
- eine Anlage zur Stahl- oder Metallerzeugung, insbesondere einen Lichtbogenofen oder einen Sauerstoffblaskonverter,
- einen als Rauchgaskanal ausgebildeten Abgaskanal zum Ableiten der Rauchgase aus der Anlage zur Stahl- oder Metallerzeugung, mit Kühlflächen, die mit Wasser durchströmt und von den Rauchgasen beheizt werden können, sowie
- eine Verbindungsleitung zwischen der Entnahmeeinrichtung einerseits und der Vakuumentgasungsanlage der Anlage zur Stahl- oder Metallerzeugung und/oder einem anderen Dampfabnehmer andererseits.

Es kann ein Wärmetauscher vorgesehen sein, sodass zumindest ein Teil des in den Kühlflächen erhitzten Wassers abgekühlt und anschließend wieder den Kühlflächen als Kühlwasser zugeleitet werden kann.

Zur Vermeidung von Dampfbildung im Heißwasserspeicher kann eine Temperaturregelung zur Regelung der Temperatur des Heißwassers im Heißwasserspeicher vorgesehen sein, sodass die Temperatur des Heißwassers im Heißwasserspeicher auf einen Wert geregelt werden kann, der unterhalb oder auf der Siedetemperatur liegt.

Um die für die Dampfherstellung entnommene Wassermenge durch Speisewasser, das den Kühlflächen zugeführt wird, ersetzen zu können, kann ein Speisewasserbehälter vorgesehen sein, aus welchem den Kühlflächen Speisewasser zugeführt werden kann.

Statt eines Heißwasserspeichers können, wie bereits erläutert, in einer erfindungsgemäßen Anlage auch mehrere parallel geschaltete Heißwasserspeicher vorgesehen sein.

Die erfindungsgemäße Anlage kann im Falle eines Stahlwerks bei jedem einzelnen Lichtbogenofen oder Sauerstoffblaskonverter für die Dampferzeugung zum Einsatz kommen, auch wenn dort kein Dampfnetz vorhanden ist.

Das erfindungsgemäße Verfahren bzw. die erfindungsgemäße Anlage kann darüber hinaus bei jedem konventionellen Abhitzekessel zum Einsatz kommen.

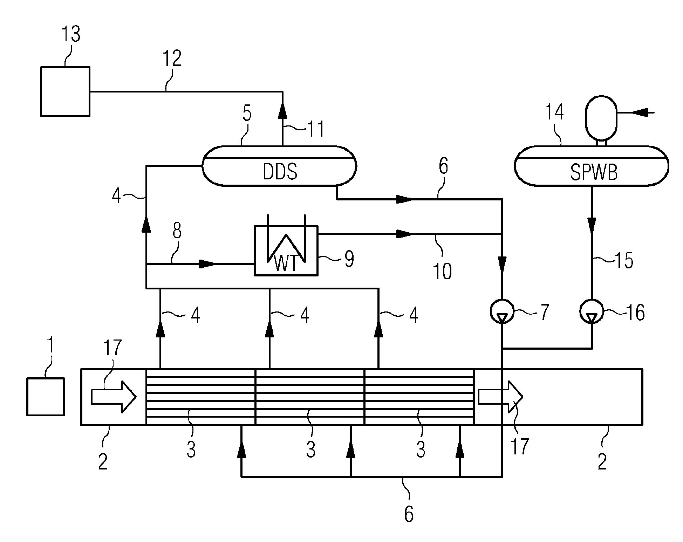

### KURZE BESCHREIBUNG DER FIGUR

Die Erfindung wird im Folgenden anhand der beispielhaften und schematischen Figur näher erläutert, welche ein Anlagenschema einer erfindungsgemäßen Anlage zeigt.

### WEGE ZUR AUSFÜHRUNG DER ERFINDUNG

Die erfindungsgemäße Anlage umfasst eine Anlage 1 zur Stahloder Metallerzeugung, z.B. einen Lichtbogenofen oder einen Sauerstoffblaskonverter. Die Rauchgase aus der Anlage 1 zur Stahlerzeugung werden in einen Rauchgaskanal 2 geleitet, in welchem eine oder mehrere Kühlflächen 3 angeordnet sind, die vom Rauchgas beheizt werden. Die Kühlflächen 3 werden von Wasser aus dem Heißwasserkreislauf durchströmt. Der Heißwasserkreislauf besteht aus den Kühlflächen 3, aus den Verbindungsleitungen 4, die das in den Kühlflächen 3 erhitzte Wasser zum Heißwasserspeicher 5 leiten, aus dem Heißwasserspeicher 5 und aus den Verbindungsleitungen 6, mit welchen abgekühltes Heißwasser zum erneuten Erhitzen wieder in die Kühlflächen 3 geleitet wird. In der Verbindungsleitung 6 kann eine Pumpe 7 vorgesehen sein, die das abgekühlte Heißwasser in die Kühlflächen 3 pumpt.

Von der Verbindungsleitung 4 zum Heißwasserspeicher 5 zweigt eine Zuleitung 8 zu einem Wärmetauscher 9 ab, sodass ein Teil des in den Kühlflächen 3 erhitzten Wassers - oder bei fehlendem Dampfbedarf bei der Stahlerzeugung das gesamte erhitzte Wasser - abgekühlt und anschließend wieder über Ableitung 10 und mittels Pumpe 7 über die Verbindungsleitung 6 wieder den Kühlflächen 3 als Kühlwasser zugeleitet werden kann.

Der Heißwasserspeicher 5 sowie die übrigen Bestandteile des Heißwasserkreislaufs (Verbindungsleitungen 4, 6, Kühlflächen 3) müssen so ausgeführt sein, dass das in den Kühlflächen erhitzte Wasser unter Druckbeaufschlagung als Heißwasser im Heißwasserspeicher 5 gespeichert werden kann, müssen also einem Druck größer 1 MPa, insbesondere im Bereich von 2,5 bis 5 MPa, standhalten können. Der Heißwasserspeicher 5 weist eine Entnahmeeinrichtung 11 zur Entnahme von Heißwasser bzw. Dampf auf, die so ausgebildet ist, dass durch Entspannung des Heißwassers bei Entnahme aus dem Heißwasserspeicher 5 Dampf hergestellt wird. Über eine Verbindungsleitung 12 wird der erzeugte Dampf von der Entnahmeeinrichtung 11 zur Vakuumentgasungsanlage 13 geleitet, die Bestandteil der Anlage 1 zur Stahlerzeugung sein kann. Alternativ kann der Dampf aus der Entnahmeeinrichtung 11 auch einem oder mehreren anderen Dampfabnehmern zugeführt werden, zum Beispiel einem bestehenden Dampfnetz, etwa zur Strom- oder Fernwärmeerzeugung. Es kann auch vorgesehen sein, dass der erzeugte Dampf in einem Zeitraum der Vakuumentgasungsanlage 13 zugeführt wird, wenn diese nämlich gerade arbeitet und Dampf benötigt, und in einem nachfolgenden Zeitraum, wenn die Vakuumentgasungsanlage 13 nicht in Betrieb ist, einem anderen Dampfabnehmer.

Statt eines Heißwasserspeichers 5 können auch mehrere parallel geschaltete Heißwasserspeicher 5 vorgesehen sein. Dabei würde dann jeder Heißwasserspeicher 5 nur von einer (oder mehreren) bestimmten Heizflächen 3 beheizt werden. Von jedem Heißwasserspeicher 5 könnte dann über eine jeweils eigene Entnahmeeinrichtung 11 Heißwasser bzw. Dampf entnommen werden und einem jeweils anderen Dampfabnehmer zugeführt werden. Es wäre auch möglich, alle Entnahmeeinrichtungen 11 in eine gemeinsame Verbindungsleitung 12 für Dampf münden zu lassen, sodass der Dampf einem Dampfabnehmer zugeführt wird.

Dieser könnte dann zeitlich aufeinanderfolgend von verschiedenen Heißwasserspeichern 5 mit Dampf versorgt werden.

Für den bzw. die Heißwasserspeicher 5 ist eine Temperaturregelung zur Regelung der Temperatur des Heißwassers im Heißwasserspeicher 5 vorgesehen, die hier nicht dargestellt ist.

Um die für die Dampfherstellung entnommene Wassermenge ersetzen zu können, ist ein Speisewasserbehälter 14 vorgesehen, aus welchem den Kühlflächen 3 über eine Verbindungsleitung 15, die eine Pumpe 16 enthält und in die Verbindungsleitung 6 mündet, Speisewasser zugeführt werden kann.

Wenn Rauchgas 17 aus der Anlage 1 zur Stahlerzeugung mit etwa 1600 °C durch den Rauchgaskanal 2 strömt, wird das Kühlwasser in den Kühlflächen 3 erhitzt und steigt über de Verbindungsleitungen 4 in den Heißwasserspeicher 5 auf. Dort wird es auf einem Druck von größer 1 MPa, insbesondere im Bereich von 2,5 bis 5 MPa, gehalten, indem laufend die Temperatur des Heißwassers gemessen wird. Der Heißwasserspeicher 5 enthält somit keinen Wasserdampf, sondern nur Wasser.

Bei Annäherung der Temperatur im Heißwasserspeicher 5 an die Siedelinie wird die Zufuhr von Heißwasser aus dem Kühlflächen 3 in den Heißwasserspeicher 5 reduziert oder gesperrt. Das ganze Heißwasser oder ein Teil davon wird dann aus dem Kühlflächen 3 über die Zuleitung 8 dem Wärmetauscher 9 zugeführt und dort abgekühlt.

Wenn Dampf benötigt wird, wird die Entnahmeeinrichtung 11 betätigt, sodass Heißwasser aus dem Heißwasserspeicher 5 austritt, wobei dieses durch die Expansion in der Entnahmeeinrichtung 11 verdampft. Bei der Entspannung des entnommenen Heißwassers wird entlang der Siedelinie gearbeitet.

### Bezugszeichenliste:

- 1: Anlage zur Stahlerzeugung
- 2: Rauchgaskanal
- 3: Kühlfläche
- 4: Verbindungsleitung zum Heißwasserspeicher 5
- 5: Heißwasserspeicher
- 6: Verbindungsleitung vom Heißwasserspeicher 5
- 7: Pumpe
- 8: Zuleitung
- 9: Wärmetauscher
- 10: Ableitung
- 11: Entnahmeeinrichtung zur Entnahme von Heißwasser
- 12: Verbindungsleitung für Dampf
- 13: Vakuumentgasungsanlage
- 14: Speisewasserbehälter
- 15: Verbindungsleitung
- 16: Pumpe
- 17: Rauchgas

## Patentansprüche

1. Verfahren zur Nutzung der Abwärme aus Abgasen zur Dampfgewinnung, wobei mit Wasser durchströmte Kühlflächen (3) von den Abgasen beheizt werden, **dadurch gekennzeichnet, dass** das in den Kühlflächen (3) erhitzte Wasser unter Druckbeaufschlagung als Heißwasser in zumindest einem Heißwasserspeicher (5) gespeichert wird, und erst durch Entspannung des Heißwassers bei Entnahme aus dem Heißwasserspeicher Dampf hergestellt wird, welcher zumindest einem Dampfabnehmer zugeführt wird.

2. Verfahren nach Anspruch 1, **dadurch gekennzeichnet, dass** die Abwärme aus den Rauchgasen (17) der Metall- oder Stahlerzeugung genutzt wird, wobei der hergestellte Dampf wieder der Stahlerzeugung zugeführt wird.

3. Verfahren nach Anspruch 1 oder 2, **dadurch gekennzeichnet, dass** die Abwärme aus Rauchgasen (17) eines Lichtbogenofens oder eines Sauerstoffblaskonverters genutzt wird.

4. Verfahren nach einem der Ansprüche 1 bis 3, **dadurch gekennzeichnet, dass** der Dampf zumindest teilweise zur Vakuumentgasung von Stahlschmelze verwendet wird.

5. Verfahren nach einem der Ansprüche 1 bis 4, **dadurch gekennzeichnet, dass** der Dampf zumindest teilweise in ein bestehendes Dampfnetz, etwa zur Strom- oder Fernwärmeerzeugung, eingebracht wird.

6. Verfahren nach einem der Ansprüche 1 bis 5, **dadurch gekennzeichnet, dass** das in den Kühlflächen (3) erhitzte Wasser auf einem Druck größer 1 MPa, insbesondere im Bereich von 2,5 bis 5 MPa, gehalten wird.

7. Verfahren nach einem der Ansprüche 1 bis 6, **dadurch gekennzeichnet, dass** bei der Herstellung des Dampfs die Entspannung des entnommenen Heißwassers entlang der Siedelinie erfolgt.

8. Verfahren nach einem der Ansprüche 1 bis 7, **dadurch gekennzeichnet, dass** zumindest ein Teil des in den Kühlflächen (3) erhitzten Wassers in einem Wärmetauscher (9) abgekühlt und anschließend wieder den Kühlflächen (3) als Kühlwasser zugeleitet wird.

9. Verfahren nach einem der Ansprüche 1 bis 8, **dadurch gekennzeichnet, dass** zur Vermeidung von Dampfbildung im Heißwasserspeicher (5) die Temperatur des Heißwassers im Heißwasserspeicher auf einen Wert geregelt wird, der unterhalb oder auf der Siedetemperatur liegt.

10. Verfahren nach einem der Ansprüche 1 bis 9, **dadurch gekennzeichnet, dass** die für die Dampfherstellung entnommene Wassermenge durch Speisewasser, das den Kühlflächen (3) zugeführt wird, ersetzt wird.

11. Verfahren nach einem der Ansprüche 1 bis 10, **dadurch gekennzeichnet, dass** das in den Kühlflächen (3) erhitzte Wasser mehreren parallel geschalteten Heißwasserspeichern (5) zugeführt wird.

12. Anlage zur Durchführung des Verfahrens nach einem der Ansprüche 1 bis 11, umfassend zumindest
- einen Abgaskanal zum Ableiten von Abgasen, mit Kühlflächen (3), die mit Wasser durchströmt und von den Abgasen beheizt werden können, **dadurch gekennzeichnet, dass**
- zumindest ein Heißwasserspeicher (5) vorgesehen ist, der mit den Kühlflächen (3) verbunden und geeignet ist, das in den Kühlflächen erhitzte Wasser unter Druckbeaufschlagung als Heißwasser zu speichern, sowie
- eine Entnahmeeinrichtung (11) zur Entnahme von Heißwasser, die so ausgebildet ist, dass durch Entspannung des Heißwassers bei Entnahme aus dem Heißwasserspeichers (5) Dampf hergestellt wird, sowie
- eine Verbindungsleitung (12) zwischen Entnahmeeinrichtung (11) und zumindest einem Dampfabnehmer.

13. Anlage nach Anspruch 12, **dadurch gekennzeichnet, dass** diese zumindest umfasst
- eine Anlage zur Stahl- oder Metallerzeugung (1), insbesondere einen Lichtbogenofen oder einen Sauerstoffblaskonverter,
- einen als Rauchgaskanal (2) ausgebildeten Abgaskanal zum Ableiten der Rauchgase (17) aus der Anlage zur Stahl- oder Metallerzeugung, mit Kühlflächen (3), die mit Wasser durchströmt und von den Rauchgasen (17) beheizt werden können, sowie
- eine Verbindungsleitung (12) zwischen der Entnahmeeinrichtung (11) einerseits und einer Vakuumentgasungsanlage (13) der Anlage (1) zur Stahloder Metallerzeugung und/oder einem anderen Dampfabnehmer andererseits.

14. Anlage nach Anspruch 12 oder 13, **dadurch gekennzeichnet, dass** ein Wärmetauscher (9) vorgesehen ist, sodass zumindest ein Teil des in den Kühlflächen (3) erhitzten Wassers abgekühlt und anschließend wieder den Kühlflächen (3) als Kühlwasser zugeleitet werden kann.

15. Anlage nach einem der Ansprüche 12 bis 14, **dadurch gekennzeichnet, dass** eine Temperaturregelung zur Regelung der Temperatur des Heißwassers im Heißwasserspeicher (5) vorgesehen ist.

16. Anlage nach einem der Ansprüche 12 bis 15, **dadurch gekennzeichnet, dass** ein Speisewasserbehälter (14) vorgesehen ist, aus welchem den Kühlflächen (3) Speisewasser zugeführt werden kann.

17. Anlage nach einem der Ansprüche 12 bis 16, **dadurch gekennzeichnet, dass** mehrere parallel geschaltete Heißwasserspeicher (5) vorgesehen sind.
